# EUROPEAN PATENT SPECIFICATION

(11) **EP 0 507 374 B1**
(45) Date of publication and mention of the grant of the patent: **01.03.1995**
(21) Application number: 92200713.3
(22) Date of filing: 12.03.1992
(51) Int. Cl.: A22C 11/02

(54) **Method and device for packaging products in generically tubular sheaths**
Verfahren und Vorrichtung zum Verpacken von Produkten in rohrförmigen Hüller
Procédé et dispositif pour emballer des produits dans des enveloppes tubulaires

(30) Priority: 29.03.1991 IT MI910900
(43) Date of publication of application: 07.10.1992
(73) Proprietor: Possenti, Giovan Battista, 22053 Lecco (Como) (IT)
(72) Inventor: Possenti, Giovan Battista, 22053 Lecco (Como) (IT)
(74) Representative: Faraggiana, Vittorio, Dr. Ing.

(56) References cited:
- EP-A- 0 068 578
- EP-A- 0 268 206
- EP-A- 0 268 537
- DE-A- 3 811 421
- DE-A- 3 840 522
- US-A- 4 675 945
- US-A- 4 980 949

## Description

There are known machines which pack products such as meat, sausage meat or the like into segments of a tubular sheath such as animal or artificial gut, omentum, etc.

In these machines there are various problems which occur when filling the segment of sheath, sealing the ends and separating it from the rest of the continuous tubular element. In fact, first and foremost it must be properly filled both in terms of quantity and in terms of compression. Moreover, care must be taken to ensure that the contents of the segment are not squeezed out when the sheath is being sealed.

The machines of known technique solve these problems either partially and unsatisfactorily or in an excessively complicated way. In the first case, the resulting products are not wholly satisfactory, and in the second case the machines are too expensive both to purchase and to service.

The general scope of this invention is to obviate the aforementioned problems by providing a method and a machine according to such method for packaging products such as soft meat, sausage meat or the like, in which the resulting package is always perfect with regard both to the seal and to the quantity and compression of the product, all of which is achieved by means of an easy to operate and reliable mechanism.

This scope is achieved according to the invention by providing a method for sequential packaging of products, such as sausage meat, meat or the like, in which a delivery outlet introduces a product into a generically tubular continuous sheath fed peripherally to the outlet, sealing means sealing the sheath in a first area before delivery of a product and in a second area after delivery of a product to isolate said product in a segment of the sheath, characterized by the fact of comprising, between the steps of delivering a product and the step of sealing the sheath in the second area, the further steps of constricting the sheath in a first position between the product inside it and the delivery outlet; shifting the first constricting position towards the product so as to pull the segment of sheath over the product and compact it; constrict the sheath in a second position between the first position and the delivery outlet, said second area being delimited by the first and second position.

According to said method a machine is provided for sequential packaging of soft products, such as sausage meat, soft meat or the like, in which a delivery outlet introduces a product into a generically tubular continuous sheath fed peripherally to the outlet, sealing means being operated to seal the sheath in a first area before delivery of a product and in a second area after delivery of a product to isolate said product in a segment of the sheath, characterized by the fact of comprising first constricting means for constricting the sheath in a first position between the product inside it and the delivery outlet; said first means being movable to slide along the sheath from a simple constricting position to a thrust position in which pressure is exerted on the product through the constricted portion of the sheath in order to stretch the segment of the sheath over the product and compact it; second means for constricting the sheath in a second position between the first position and the delivery outlet; said second area being delimited by first and second position.

The innovatory principles of this invention and its advantages with respect to the known technique will be more clearly evident from the following description of a possible exemplificative embodiment applying such principles, with reference to the accompanying drawings, in which:
- figure 1 shows a schematic partial plan view of a packaging machine according to the invention;
- figure 2 shows a view along the line II-II of figure 1;
- figures 3 to 8 show a schematic representation of the operating steps of the machine of figure 1.

With reference to the figures, a packaging machine, made according to the invention and generically indicated by reference 10, comprises a mould duct 11 from which is expelled, by means of a piston 12, the soft product to be packed in a flexible sheath 13 fed by a tubular guiding element 14 coaxial to the duct 11. The sheath 13 can be made of elastic or non-elastic net, animal or artificial gut, etc., or combinations of different elements, such as for example a net wrapped round gut, depending upon the type of product to be packaged.

Disposed at the outlet of the duct 11 is a conveyor belt 15 for discharging a packaged product. Also disposed at the outlet of the duct 11 are jaw-type elements 16, 17 and 18, each composed of pairs of jaws which are movable pincer-fashion in planes perpendicular to the axis of the duct 11.

Also provided at the side of the jaws is a known sealing device 23.

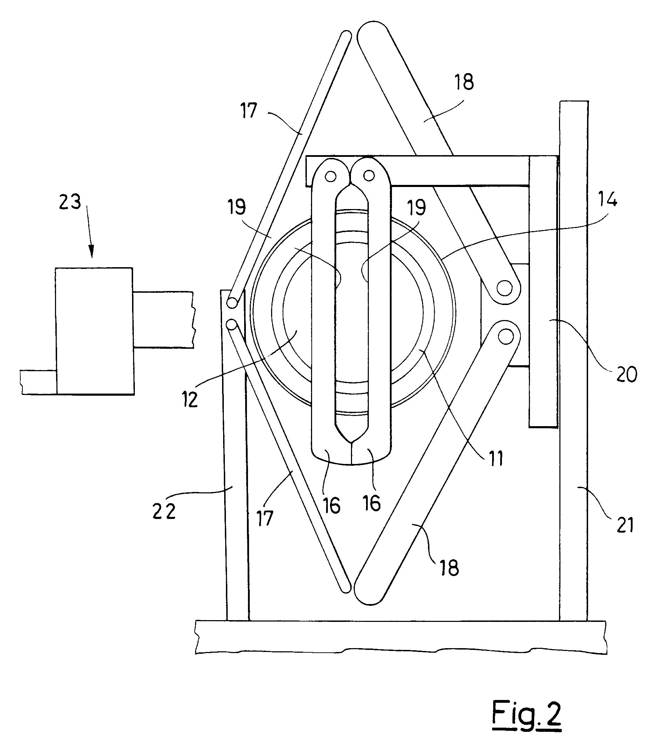

As can be more clearly seen in figure 2, the jaws 16 (shown in their closed position) define between them a slot 19.

The jaws 16 and the jaws 18 are supported by a slide 20 sliding, in the direction of flow of the product from the duct 11, on a support 21 integral with the machine. The jaws 17 are fixedly supported by means of a support.

As can be seen in figure 2, the closing direction of the jaws 17, 18 is substantially at right angles with respect to the closing direction of the jaws 16.

The carriage 20 and all the pairs of jaws are movable by means of controlled actuating means, such as for example electric, pneumatic actuators, etc., easily imaginable by any technician and therefore not further described, which are advantageously controlled automatically by means of known electronic, mechanical or electromechanical sequential means.

The machine also comprises other elements, such as magazines and continuous feeders for feeding the sheath 13 and the product to be packed, which being of known types and therefore known by the technician are neither shown nor described in detail.

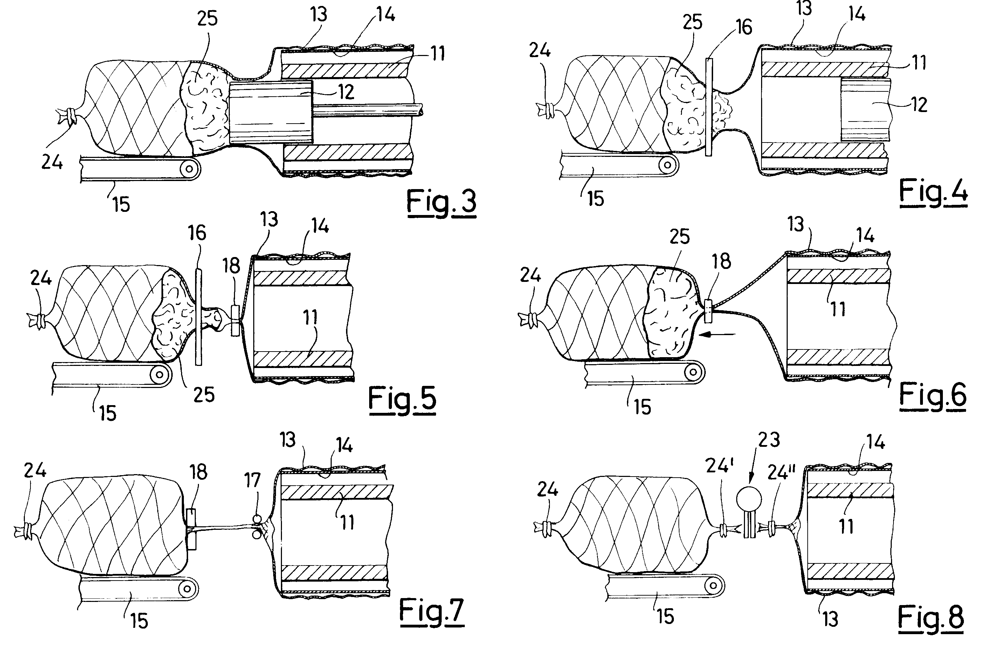

With reference to the schematic figures 3-8, a description is given hereunder of an operating cycle of the machine 10.

Figure 3 shows the first step of filling the leading segment of the continuous sheath 13, sealed at the end by a fastener 24. During this step the piston 12 pushes the product 25 (fed into the mould duct 11 by known means) into the closed segment which is fed by degrees by the tubular element 14. The product can consist for example of pieces of meat, a mixture for dressed pork products, or similar types of sausages.

Once the piston 12 has reached the end of its stroke it retreats into the duct 11 while the jaws 16 are made to close over the sheath 13. Generically, these jaws hold the product in the segment of sheath even if a small quantity of it should remain trapped in the slot 19 without being separated from the main mass. This condition is shown in figure 4.

As can be seen in figure 5, at this point the jaws 18 are made to close thereby throttling the sheath 13 close to the outlet of the duct 11 at a point where the sheath is almost certainly empty since the product 25 is detained by the jaws 16.

At this point the carriage 20 is made to move forward in the direction of the arrow shown in figure 6, so that the jaws 18 compress the product while the sheath 13 is pulled taut.

When the product is fully compacted and the segment of the sheath containing it is stretched to the desired degree, the jaws 17 are closed so as to define a narrowed area of the sheath as shown in figure 7. This area is shifted towards the fastening head which seals it with two fasteners 24' and 24'' and cuts the sheath between them.

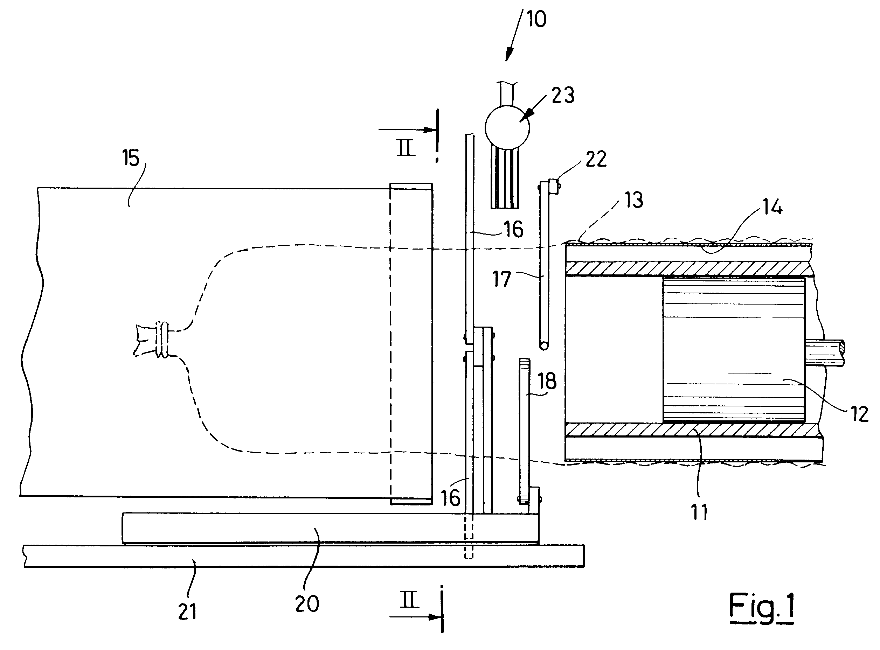

As can be seen in figure 8, it is thus possible to seal the filled segment of the sheath, which is removed by means of the conveyor belt 15, and to form the sealed end for the subsequent filling cycle, which starts again from the condition of figure 1.

At this point it will be clear that the intended scopes are achieved.

The combination of pairs of jaws and their reciprocal movement ensure that the compressing and filling are carried out to perfection, while at the same time preventing the product from partially oozing from the fastener and preventing the possibility of residues of product between the two fastenings on either side of the cutting point between segments of the sheath.

The foregoing description of an embodiment applying the innovatory principles of this invention is obviously given by way of example in order to illustrate such innovatory principles and should not therefore be understood as a limitation to the sphere of the invention claimed herein.

For example, the shape of the jaws and the support for their reciprocal movement can differ from those shown schematically.

## Claims

1. Method for sequential packaging of products, such as sausagemeat, meat or the like, in which a delivery outlet introduces a product into a generically tubular continuous sheath fed peripherally to the outlet, sealing means sealing the sheath in a first area before delivery of a product and in a second area after delivery of a product to isolate said product in a segment of the sheath, characterized by the fact of comprising, between the steps of delivering a product and the step of sealing the sheath in the second area, the further steps of constricting the sheath in a first position between the product inside it and the delivery outlet; shifting the first constricting position towards the product so as to stretch the segment of sheath over the product and compact it; constrict the sheath in a second position between the first position and the delivery outlet, said second area being delimited by the first and second position.

2. Method as claimed in claim 1, characterized by the fact of comprising the step of delivering the product and the step of constricting the sheath in the first position, and the further step of constricting the sheath between the first position and the product in order to contain the product substantially within the allotted segment, said constriction being removed after having constricted the sheath in the first position, thereby avoiding residues of product.

3. Method as claimed in claim 1, characterized by the fact that said first and second position delimit also said first area for a product subsequently fed into the sheath.

4. Method as claimed in claim 3, characterized by the fact that between the second area of the product in the segment and the first area of the product subsequently introduced a cut is made to separate the segment containing the product from the rest of the sheath.

5. Machine for sequential packaging of products, such as mixtures for sausages, meat or the like, in which a delivery outlet introduces a product into a generically tubular continuous sheath fed peripherally to the outlet, sealing means being operated to seal the sheath in a first area before delivery of a product and in a second area after delivery of a product to isolate said product in a segment of the sheath, characterized by the fact of comprising first constricting means for constricting the sheath in a first position between the product inside it and the delivery outlet; said first means being movable to slide along the sheath from a simple constricting position to a thrust position in which pressure is exerted on the product through the constricted portion of the sheath in order to stretch the segment of the sheath over the product and compact it; second means for constricting the sheath in a second position between the first position and the delivery outlet; said second area being delimited by first and second position.

6. Machine as claimed in claim 5, characterized by the fact of comprising third constricting means for constricting the sheath between the first position and the product in order to contain the product substantially within the allotted segment, said means being operated before operating the first means and being released immediately after they are operated in order to prevent any product from entering the first position.

7. Machine as claimed in claim 5, characterized by the fact that the first and second positions delimit also said first area for a product subsequently fed into the sheath.

8. Machine as claimed in claim 7, characterized by the fact that cutting means are operated between the second area of the product in the segment and the first area of the product subsequently introduced in order to separate the segment containing the product from the rest of the sheath.

9. Machine as claimed in claim 5, characterized by the fact that the first constricting means comprise a first pair of elements which are made to close over the sheath with a pincer movement, said pair of elements being supported by a carriage movable along the length of the sheath from said simple constricting position to said thrust position.

10. Machine as claimed in claim 5, characterized by the fact that the second constricting means comprise a second pair of elements which are made to close over the sheath with a pincer movement.

11. Machine as claimed in claim 6, characterized by the fact that the third constricting means comprise a third pair of elements which are made to close over the sheath with a pincer movement.

12. Machine as claimed in claim 11, characterized by the fact that in the closed position the elements of the pair form at least one spaced apart central area to define a narrow passage for the sheath.

13. Machine as claimed in claim 5, characterized by the fact that the sealing means comprise a fastening head.

14. Machine as claimed in claims 9, 10, 11, characterized by the fact that the elements of the first and second pair close in a direction substantially at right angles to the direction of closure of the elements of the third pair.

15. Machine as claimed in claim 5, characterized by the fact that that the delivery outlet comprises a duct with a piston which sequentially ejects the products from the latter.

16. Machine as claimed in claim 5, characterized by the fact that that the products packaged in their respective segments of sheath are removed by means of a conveyor belt.

17. Machine as claimed in claim 5, characterized by the fact that that the sheath is fed from a tubular element coaxial to the delivery outlet.

## Patentansprüche

1. Verfahren zum aufeinanderfolgenden Verpacken von Produkten, wie Wurstfleisch, Fleisch oder Ähnliches, bei dem ein Ausbringungsauslaß ein Produkt in eine im allgemeinen rohrförmige kontinuierliche Hülle einführt, die am Umfang des Auslasses zugeführt wird, wobei Dichtmittel die Hülle in einem ersten Bereich vor der Ausbringung eines Produktes und in einem zweiten Bereich nach der Ausbringung eines Produktes abdichten, um das Produkt in einem Abschnitt der Hülle zu vereinzeln, gekennzeichnet durch die weiteren Schritte, zwischen den Schritten der Ausbringung eines Produkts und dem Schritt des Abdichtens der Hülle in dem zweiten Bereich, des Einschnürens der Hülle in einer ersten Position zwischen dem innenliegenden Produkt und dem Ausbringungsauslaß; des Verschiebens der ersten Einschnürposition in Richtung auf das Produkt, so daß der Hüllenabschnitt über dem Produkt gespannt wird und das Produkt verdichtet; des Einschnürens der Hülle in einer zweiten Position zwischen der ersten Position und dem Ausbringungsauslaß, wobei der zweite Bereich durch die erste und zweite Position abgegrenzt wird.

2. Verfahren nach Anspruch 1, gekennzeichnet durch die Tatsache des Einschließens des Schrittes der Ausbringung des Produktes und des Schrittes des Einschnürens der Hülle in der ersten Position und des weiteren Schrittes des Einschnürens der Hülle zwischen der ersten Position und dem Produkt, um das Produkt im wesentlichen innerhalb des zugewiesenen Abschnitts zu halten, wobei die Einschnürung entfernt wird, nachdem die Hülle in der ersten Position eingeschnürt wurde, wodurch verbleibende Produktreste vermieden werden.

3. Verfahren nach Anspruch 1, dadurch gekennzeichnet, daß die erste und zweite Position auch den ersten Bereich für ein Produkt, das nachfolgend der Hülle zugeführt wird, abgrenzt.

4. Verfahren nach Anspruch 3, dadurch gekennzeichnet, daß zwischen dem zweiten Bereich des Produktes in dem Abschnitt und dem ersten Bereich des Produktes, das nachfolgend eingeführt wird, ein Schnitt geführt wird, um den Abschnitt, der das Produkt enthält, von dem Rest der Hülle zu trennen.

5. Vorrichtung zum aufeinanderfolgenden Verpacken von Produkten, wie Mischungen für Würste, Fleisch oder Ähnliches, in der ein Ausbringungsauslaß ein Produkt in eine im allgemeinen rohrförmige kontinuierliche Hülle einführt, die am Umfang des Auslasses zugeführt wird, mit Dichtmitteln, die betrieben werden, um die Hülle in einem ersten Bereich vor der Ausbringung eines Produktes und in einem zweiten Bereich nach der Ausbringung eines Produktes abzudichten, um das Produkt in einem Abschnitt der Hülle zu vereinzeln, gekennzeichnet durch erste Einschnürmittel zum Einschnüren der Hülle in einer ersten Position zwischen dem innenliegenden Produkt und dem Ausbringungsauslaß, wobei die ersten Mittel bewegbar sind, um entlang der Hülle von einer einfachen Einschnürposition in eine Pressposition zu gleiten, in der Druck durch den eingeschnürten Teil der Hülle auf das Produkt ausgeübt wird, um den Abschnitt der Hülle über dem Produkt zu spannen und es zu verdichten; zweite Mittel zum Einschnüren der Hülle in einer zweiten Position zwischen der ersten Position und dem Ausbringungsauslaß, wobei der zweite Bereich durch die erste und zweite Position abgegrenzt wird.

6. Vorrichtung nach Anspruch 5, gekennzeichnet durch dritte Einschnürmittel zum Einschnüren der Hülle zwischen der ersten Position und dem Produkt, um das Produkt im wesentlichen innerhalb des zugewiesenen Abschnitts zu halten, wobei die Mittel getätigt werden, bevor das erste Mittel arbeitet, und unmittelbar, nachdem sie betrieben wurden, freigegeben werden, um jedes Produkt am Eindringen in die erste Position zu hindern.

7. Vorrichtung nach Anspruch 5, dadurch gekennzeichnet, daß die erste und die zweite Position auch den ersten Bereich eines Produktes, das nachfolgend der Hülle zugeführt wird, abgrenzen.

8. Vorrichtung nach Anspruch 7, gekennzeichnet durch Schneidmittel, die zwischen dem zweiten Bereich des Produktes in dem Abschnitt und dem ersten Bereich des Produktes, das nachfolgend eingeführt wird, betrieben werden, um den Abschnitt, der das Produkt enthält, von dem Rest der Hülle abzutrennen.

9. Vorrichtung nach Anspruch 5, dadurch gekennzeichnet, daß das erste Einschnürmittel ein erstes Bauelementepaar umfaßt, dazu dient, die Hülle mit einer Zangenbewegung zu verschließen, wobei das Bauelementepaar durch einen entlang der Länge der Hülle von der einfachen Einschnürposition bis zur Pressposition bewegbaren Schlitten gestützt wird.

10. Vorrichtung nach Anspruch 5, dadurch gekennzeichnet, daß das zweite Einschnürmittel ein zweites Bauelementepaar umfaßt, das dazu dient, die Hülle mit einer Zangenbewegung zu verschließen.

11. Vorrichtung nach Anspruch 6, dadurch gekennzeichnet, daß das dritte Einschnürmittel ein drittes Bauelementepaar umfaßt, das dazu dient, die Hülle mit einer Zangenbewegung zu verschließen.

12. Vorrichtung nach Anspruch 11, dadurch gekennzeichnet, daß die Bauelementepaare in der Schließposition mindestens einen beabstandeten zentralen Bereich bilden, um einen engen Durchlaß der Hülle festzulegen.

13. Vorrichtung nach Anspruch 5 , dadurch gekennzeichnet, daß die Dichtmittel einen Befestigungskopf umfassen.

14. Vorrichtung nach Anspruch 9, 10, 11, dadurch gekennzeichnet, daß die ersten und zweiten Bauelementepaare in einer Richtung im wesentlichen rechtwinklig zu der Verschlußrichtung des dritten Bauelementepaares schließen.

15. Vorrichtung nach Anspruch 5, dadurch gekennzeichnet, daß der Ausbringungsauslaß ein Rohr mit einem Kolben umfaßt, der aufeinanderfolgend die Produkte daraus ausstößt.

16. Vorrichtung nach Anspruch 5, dadurch gekennzeichnet, daß die Produkte, die in ihren jeweiligen Abschnitten der Hülle verpackt sind, mittels eines Fließbandes entfernt werden.

17. Vorrichtung nach Anspruch 5, dadurch gekennzeichnet, daß die Hülle von einem rohrförmigen zum Ausbringungsauslaß koaxialen Bauelement zugeführt wird.

## Revendications

1. Procédé pour emballer en séquence des produits, tels que de la chair à saucisse, de la viande ou analogue, dans lequel une sortie de distribution introduit un produit à l'intérieur d'une gaine continue de manière générale tubulaire alimentée de manière périphérique par rapport à la sortie, des moyens de scellage scellant la gaine dans une première zone avant distribution d'un produit et dans une seconde zone après distribution d'un produit pour isoler ledit produit dans un tronçon de la gaine, caractérisé par le fait qu'il comporte, entre les étapes consistant à distribuer un produit et l'étape consistant à sceller la gaine dans la seconde zone, les autres étapes consistant à pincer la gaine dans une première position située entre le produit contenu dans celle-ci et la sortie de distribution, déplacer le première position de pincement vers le produit de manière à étirer le tronçon de gaine sur le produit et le compacter, pincer la gaine dans une seconde position située entre la première position et la sortie de distribution, ladite seconde zone étant délimitée par les première et seconde positions.

2. Procédé selon la revendication 1, caractérisé en ce qu'il comporte l'étape consistant à distribuer le produit et l'étape consistant à pincer la gaine dans la première position, et l'étape supplémentaire consistant à pincer la gaine entre la première position et le produit afin de contenir le produit pratiquement à l'intérieur du tronçon assigné, ledit pincement étant supprimé après avoir pincé la gaine dans la première position, en évitant par conséquent des résidus de produit.

3. Procédé selon la revendication 1, caractérisé par le fait que ladite première et ladite seconde positions délimitent aussi ladite première zone pour un produit alimenté ultérieurement à l'intérieur de la gaine.

4. Procédé selon la revendication 3, caractérisé par le fait qu'entre la seconde zone du produit existant dans le tronçon et la première zone du produit introduit ultérieurement, on pratique une découpe pour séparer le tronçon contenant le produit du reste de la gaine.

5. Machine pour emballer en séquence des produits, tels que des mélanges pour saucisses, de la viande ou analogue, dans laquelle une sortie de distribution introduit un produit à l'intérieur d'une gaine continue de manière générale tubulaire alimentée de manière périphérique par rapport à la sortie, des moyens de scellage étant actionnés pour assurer le scellage de la gaine dans une première zone avant de distribuer un produit et dans une seconde zone après distribution d'un produit pour isoler ledit produit dans un tronçon de gaine, caractérisée par le fait qu'elle comporte des premiers moyens de pincement destinés à pincer la gaine dans une première position située entre le produit existant à l'intérieur de celle-ci et la sortie de distribution, lesdits premiers moyens étant mobiles pour coulisser le long de la gaine à partir d'une simple position de pincement vers une position de poussée dans laquelle une pression est exercée sur le produit par l'intermédiaire de la partie pincée de la gaine afin d'étirer le tronçon de gaine sur le produit et de compacter celui-ci, des deuxièmes moyens pour pincer la gaine dans un seconde position située entre la première position et la sortie de distribution, ladite seconde zone étant délimitée par les première et seconde positions.

6. Machine selon la revendication 5, caractérisée par le fait qu'elle comporte des troisièmes moyens de pincement destinés à pincer la gaine entre la première position et le produit afin de contenir le produit pratiquement à l'intérieur du tronçon assigné, lesdits moyens étant actionnés avant l'actionnement desdits premiers moyens et étant libérés immédiatement après qu'ils aient agi afin d'empêcher tout produit d'entrer dans la première position.

7. Machine selon la revendication 5, caractérisée par le fait que les première et seconde positions délimitent aussi ladite première zone pour un produit alimente ultérieurement à l'intérieur de la gaine.

8. Machine selon la revendication 7, caractérisée par le fait que des moyens de découpe sont actionnés entre la seconde zone du produit existant dans le tronçon et la première zone du produit introduit ultérieurement afin de séparer le tronçon contenant le produit du reste de la gaine.

9. Machine selon la revendication 5, caractérisée par le fait que les premiers moyens de pincement comportent une première paire d'éléments qui se ferment sur la gaine par l'intermédiaire d'un mouvement de tenaille, ladite paire d'éléments étant supportée par un chariot mobile le long de la longueur de gaine à partir de ladite simple position de pincement vers ladite position de poussée.

10. Machine selon la revendication 5, caractérisée par le fait que les seconds moyens de pincement comportent une seconde paire d'éléments qui se ferment sur la gaine par l'intermédiaire d'un mouvement de tenaille.

11. Machine selon la revendication 6, caracterisée par le fait que les troisièmes moyens de pincement comportent une troisième paire d'éléments qui se ferment sur la gaine par l'intermédiaire d'un mouvement de tenaille.

12. Machine selon la revendication 11, caractérisée par le fait que dans la position fermée, les éléments de la paire forment au moins une zone centrale évidée pour définir un passage étroit pour la gaine.

13. Machine selon la revendication 5, caractérisée par le fait que les moyens de scellage comportent une tête de fixation.

14. Machine selon les revendications 9, 10, 11, caractérisée par le fait que les éléments de la première et de la seconde paires se ferment dans une direction formant pratiquement un angle droit avec la direction de fermeture des éléments de la troisième paire.

15. Machine selon la revendication 5, caractérisée par le fait que la sortie de distribution comporte un conduit ayant un piston qui éjecte en séquence les produits à partir de ce dernier.

16. Machine selon la revendication 5, caractérisée par le fait que les produits emballés dans leur tronçon de gaine respectif sont enlevés par l'intermédiaire d'une courroie de convoyeur.

17. Machine selon la revendication 5, caractérisée par le fait que la gaine est alimentée à partir d'un élément tubulaire coaxial à la sortie de distribution.
